# EUROPÄISCHE PATENTSCHRIFT

(11) **EP 2 365 913 B1**
(45) Veröffentlichungstag und Bekanntmachung des Hinweises auf die Patenterteilung: **23.01.2013**
(21) Anmeldenummer: 09771337.4
(22) Anmeldetag: 09.12.2009
(51) Int. Cl.: B60G 3/10, B60G 3/28, B60G 7/00, B60G 11/08, F16F 1/368

(54) **ACHSE FÜR EIN KRAFTFAHRZEUG**
AXLE FOR A MOTOR VEHICLE
ESSIEU POUR UN VÉHICULE AUTOMOBILE

(30) Priorität: 15.12.2008 DE 102008054669
(43) Veröffentlichungstag der Anmeldung: 21.09.2011
(73) Patentinhaber: ZF Friedrichshafen AG, 88038 Friedrichshafen (DE)
(72) Erfinder: POLLMEYER, Stephan, 88046 Friedrichshafen (DE); FRUHMANN, Gabriele, A-6971 Hard (AT); WAGNER, Volker, 74523 Schwäbisch Hall (DE)
(86) Internationale Anmeldenummer: PCT/EP2009/066660
(87) Internationale Veröffentlichungsnummer: WO 2010/072563

(56) Entgegenhaltungen:
- EP-A1- 1 080 953
- DE-A1- 3 329 686
- DE-A1- 3 742 752
- US-A1- 2002 000 703

## Beschreibung

Die vorliegende Erfindung bezieht sich auf eine Achse für ein Kraftfahrzeug gemäß dem Oberbegriff des Patentanspruchs 1.

Aus der DE 10221993 B4 ist eine Radaufhängung für ungelenkte Räder von Kraftfahrzeugen bekannt, mit einem am Aufbau oder an einem Hilfsrahmen angelenkten unteren Querlenker verwindungssteifer Konstruktion, an dem ein Radträger über zwei Lagerstellen angelenkt ist, sowie mit zwei weiteren Einzellenkern, die darüber liegend ebenfalls am Aufbau und am Radträger angelenkt sind, wobei die eine Lagerstelle zwischen dem unteren Querlenker und dem Radträger in Querrichtung nachgiebig ausgebildet ist. Hierbei ist die eine Lagerstelle durch zwei in sich verschachtelte Lager gebildet, von denen das mit dem Querlenker zusammenwirkende Lager ein Torsionslager und das mit dem Radträger zusammenwirkende Lager ein Schub-Drucklager ist, wobei das Schub-Drucklager in Querrichtung auf Schub und in Hochrichtung auf Druck belastbar ist.

Ferner ist aus der WO 96/27507 eine Radaufhängung für eine Fahrzeugachse mit zwei Rädern bekannt, mit einer Querblattfederung mit Zweipunktlagerung und mit je einem Radträger, bei der eine einteilige, durchgehende und radführende Verbundwerkstoff-Querblattfeder vorgesehen ist, die aus einem mit großteils längsorientierten technischen Endlosfasern verstärktem Kunststoff besteht. Bei der bekannten Radaufhängung weist die Zweipunktlagerung eine hohe Steifigkeit in Querrichtung auf; die Verbundwerkstoff-Querblattfeder weist eine Federrate in Fahrtrichtung und eine Federrate in Hochrichtung auf, wobei das Verhältnis der Federraten zueinander mindestens 15 beträgt und die Blattfederenden in einer Anlenkung direkt und gelenkig mit den Radträgern verbunden sind. Hierbei ist ein Längs- und Querkräfte abstützendes Radführungselement vorgesehen, welches den Radträger gelenkig mit dem Chassis verbindet, sodass mit der Querblattfeder und dem Radführungselement alle Radkräfte aufnehmbar sind.

Eine gattungsbildende Achse ist aus der EP-A-1080 953 bekannt.

Der vorliegenden Erfindung liegt die Aufgabe zugrunde, eine Achse für ein Kraftfahrzeug anzugeben, welche eine hohe Funktionsintegration aufweist; des weiteren soll die erfindungsgemäße Achse leichter sein, als die aus dem Stand der Technik bekannten Achsen. Dadurch soll zum Einen eine Kosteneinsparung erzielt werden und zum Anderen die Kinematik positiv beeinflusst werden.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird eine Achse für ein Kraftfahrzeug vorgeschlagen, zumindest umfassend eine Querblattfeder, die vorzugsweise als Faserverbundteil ausgeführt ist, sowie zwei Lenker und zwei Radträger. Gemäß der Erfindung ist die Querblattfeder über zwei erste Lager direkt oder über einen Hilfsrahmen an einem Aufbau des Kraftfahrzeugs befestigt, wobei jeweils ein einem Rad des Kraftfahrzeugs zugewandtes Ende der Querblattfeder mit einem der Lenker starr verbunden ist, die im Wesentlichen in Längsrichtung des Kraftfahrzeugs ausgerichtet ist. Hierbei sind die Lenker über jeweils ein zweites Lager direkt oder über einen Hilfsrahmen mit dem Aufbau verbunden und jeweils über zumindest ein drittes Lager mit einem der Radträger verbunden. Hierdurch bilden die Lenker zusammen mit den radseitigen Enden der Querblattfeder ein Radführungselement, welches die Funktion eines konventionellen Trapezlenkers übernimmt.

In vorteilhafter Weise kann durch die entstehende Vier-Punkt-Lagerung der Querblattfeder, welche sich aus den starren Verbindungen mit den Lenkern an den Enden und aus den Befestigungen an dem Aufbau des Kraftfahrzeugs ergibt, sowohl eine Hubfederung als auch eine Wankfederung realisiert werden, was darin resultiert, dass die aus dem Stand der Technik bekannten Aufbaufedem sowie Stabilisatoren entfallen können.

Gemäß der Erfindung ist ein mit dem jeweiligen Radträger verbundener Sturzlenker vorgesehen, der mit dem Aufbau direkt oder über einen Hilfsrahmen verbunden ist.

Die Achskomponenten können, wie bereits erläutert, sowohl direkt am Fahrzeugaufbau oder über einen Hilfsrahmen mit dem Fahrzeugaufbau verbunden sein, wobei die Befestigung der Achskomponenten über einen Hilfsrahmen eine Achsvormontage ermöglicht. Eine Ausführung der Querblattfeder als Faserverbundteil ermöglicht gegenüber einer gewöhnlichen Stahlkonstruktion deutliche Gewichtsvorteile und eine hohe Elastizität. Als Faserwerkstoff sind Glasfasern, Kohlefasern oder Aramidfasern bevorzugt.

In einer bevorzugten Ausführungsform bildet die erfindungsgemäße Achse eine ungelenkte Hinterachse eines Kraftfahrzeugs.

Die Erfindung wird im Folgenden anhand der beigefügten Figuren beispielhaft näher erläutert. Es zeigen:
- Figur 1:: Eine schematische Draufsicht der Radaufhängung einer erfindungsgemäßen Achse;
- Figur 2:: Eine schematische Frontansicht der Radaufhängung einer erfindungsgemäßen Achse;
- Figur 3:: Eine schematische Seitenansicht der Radaufhängung einer erfindungsgemäßen Achse von innen betrachtet;
- Figur 4:: Eine schematische Frontansicht der Radaufhängung aus Figur 2 bei einem gleichmäßigen Einfedern;
- Figur 5:: Eine schematische Frontansicht der Radaufhängung aus Figur 2 bei einem ungleichmäßigen Einfedern.

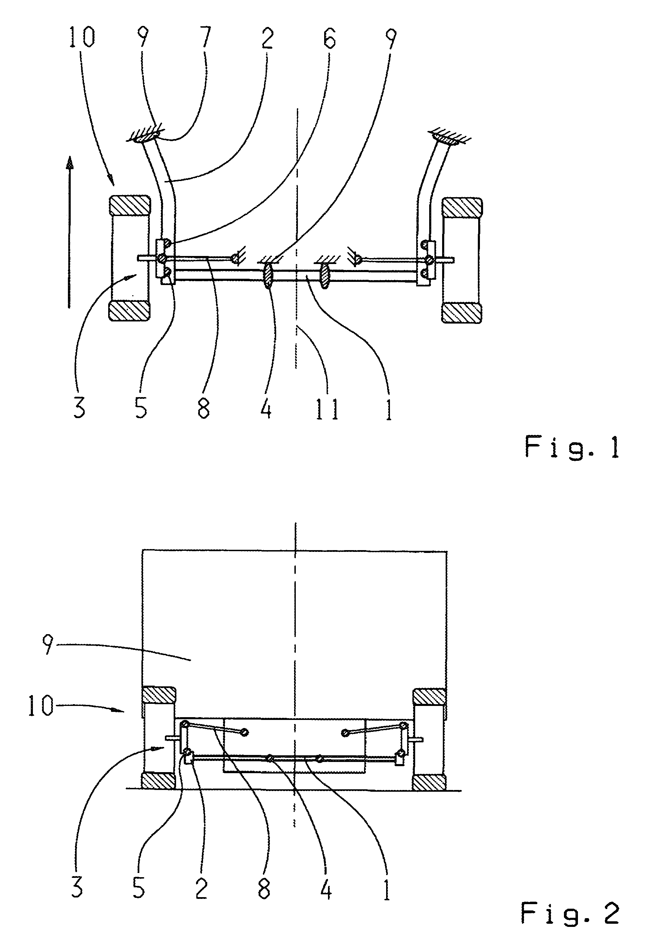

In Figuren 1, 2, 3, 4 und 5 ist eine gemäß der Erfindung ausgeführte Achse eines Kraftfahrzeugs dargestellt. Die Achse umfasst eine Querblattfeder 1, die über zwei erste Lager 4 direkt oder über einen Hilfsrahmen am Aufbau 9 des Kraftfahrzeugs befestigt ist. Insbesondere die ersten Lager 4 sind dabei vorzugsweise als Gummimetalllager ausgeführt, um eine hohe Beweglichkeit der Querblattfeder 1 gegenüber dem Aufbau 9 zu gewährleisten.

Wie aus Figuren 1, 2, 3, 4 und 5 ersichtlich, ist das jedem Rad 10 zugewandte Ende der Querblattfeder 1 mit jeweils einem Lenker 2 starr verbunden, wobei der Lenker 2 im Wesentlichen in Längsrichtung 11 des Kraftfahrzeugs ausgerichtet ist; die Vorwärtsfahrtrichtung des Kraftfahrzeugs ist in Figur 1 durch den Pfeil angedeutet.

Bezugnehmend auf Figur 1 sind die Lenker 2 über jeweils ein zweites Lager 7 direkt oder über einen Hilfsrahmen mit dem Aufbau 9 und über jeweils zwei dritte Lager 5, 6 mit dem jeweiligen Radträger 3 verbunden, so dass zusammen mit den radseitigen Enden der Querblattfeder 1 ein Radführungselement geschaffen wird, das die Funktion eines konventionellen Trapezlenkers übernimmt.

Wie insbesondere Figur 2 zu entnehmen ist, ist jedem Radträger 3 ein mit ihm verbundener Sturzlenker 8 zugeordnet, welcher mit dem Aufbau 9 direkt oder über einen Hilfsrahmen verbunden ist.

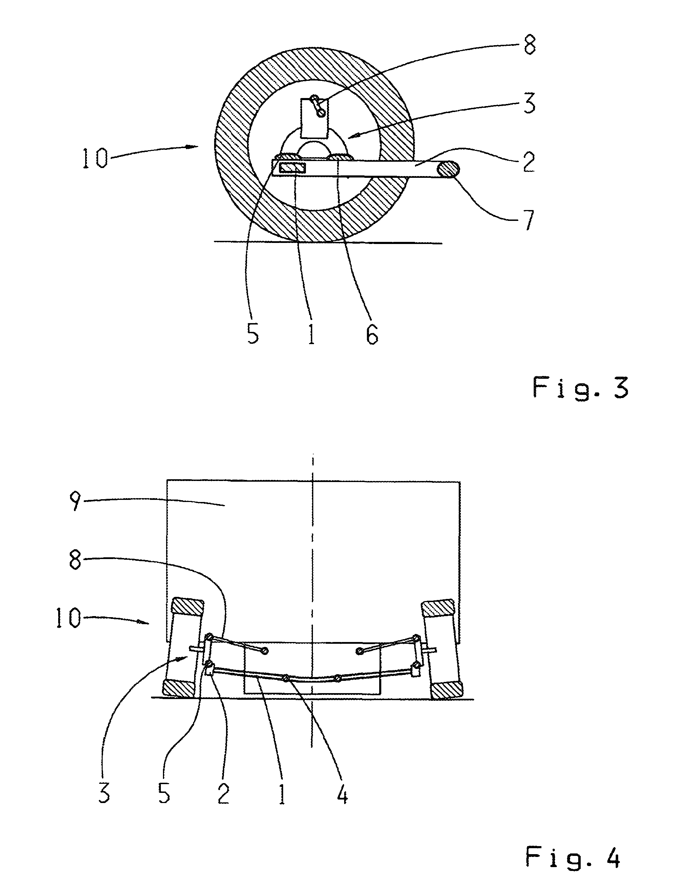

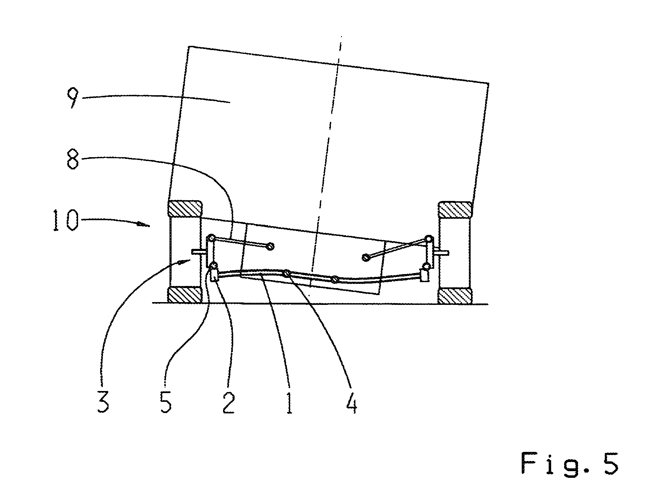

Durch die ersten Lager 4 und die starren Verbindungen mit den Lenkern 2 erzielte Vier-Punkt-Lagerung der Querblattfeder 1 wird eine effektive Hub- und Wankfederung realisiert, so dass die aus dem Stand der Technik bekannten Aufbaufedem sowie Stabilisatoren in vorteilhafter Weise entfallen können. Dies wird durch die Figuren 4 und 5 verdeutlicht, welche entsprechend Figur 2 die Achse in einer Frontansicht, jedoch während einer gleichmäßigen beziehungsweise ungleichmäßigen Einfederung zeigen.

In Figur 4 sind die Räder 10 gleichermaßen eingefedert, beispielsweise bei einer Fahrt des Kraftfahrzeugs über eine quer zur Fahrtrichtung verlaufenden Bodenwelle, wodurch die Querblattfeder 1 elastisch gespannt eine U-Form annimmt. Die Querblattfeder 1 drückt dabei den Aufbau 9 über die ersten Lager 4 in die in Figur 2 dargestellte Ruhestellung zurück und übernimmt somit die Aufgabe einer Hubfederung. In Figur 5 wird der Aufbau 9 hingegen, beispielsweise bei einer Kurvenfahrt, in eine Seitenrichtung gedrückt, wodurch lediglich eines der Räder 10 bezüglich des Aufbaus 9 einfedert. Die Querblattfeder 1 nimmt dabei elastisch gespannt die Form eines S an und drückt ebenfalls den Aufbau 9 über die ersten Lager 4 in die Ruhestellung zurück, wobei sie die Aufgabe eines Stabilisators übernimmt.

Die Lenker 2 sind in einer weiteren Ausgestaltung der Erfindung ebenfalls Faserverbundteile, welche insbesondere Gewichtsvorteile bieten.

### Bezugszeichen

- 1: Querblattfeder
- 2: Lenker
- 3: Radträger
- 4: erstes Lager
- 5: drittes Lager
- 6: drittes Lager
- 7: zweites Lager
- 8: Sturzlenker
- 9: Aufbau
- 10: Rad
- 11: Längsrichtung

## Patentansprüche

1. Achse für ein Kraftfahrzeug, zumindest umfassend eine über zwei erste Lager (4) direkt oder über einen Hilfsrahmen an einem Aufbau (9) des Kraftfahrzeugs befestigte Querblattfeder (1), zwei Lenker (2) und zwei Radträger (3), wobei jeweils ein einem Rad (10) des Kraftfahrzeugs zugewandtes Ende der Querblattfeder (1) mit einem der Lenker (2) starr verbunden ist, wobei die Lenker (2) im Wesentlichen in Längsrichtung des Kraftfahrzeugs ausgerichtet sind und jeweils über ein zweites Lager (7) direkt oder über einen Hilfsrahmen mit dem Aufbaü (9) verbunden sind und jeweils über zumindest ein drittes Lager (5, 6) mit einem der Radträger (3) verbunden sind, **dadurch gekennzeichnet, dass** jedem Radträger (3) ein mit ihm verbundener Sturzlenker (8) zügeordnet ist, welcher mit dem Aufbau (9) direkt oder über einen Hilfsrahmen verbunden ist.

2. Achse für ein Kraftfahrzeug, nach Anspruch 1, **dadurch gekennzeichnet, dass** die Querblattfeder (1) als Faserverbundteil ausgeführt ist.

3. Achse für ein Kraftfahrzeug, nach Anspruch 1, **dadurch gekennzeichnet, dass** die ersten Lager (4) als Gummimetalllager ausgeführt sind.

4. Achse für ein Kraftfahrzeug, nach Anspruch 1, **dadurch gekennzeichnet, dass** die Lenker (2) als Faserverbundteile ausgeführt sind.

## Claims

1. Axle for a motor vehicle, at least comprising a transverse leaf spring (1) fastened via two first bearings (4), directly or via a subframe, to a structure (9) of the motor vehicle, two links (2) and two wheel carriers (3), wherein in each case an end of the transverse leaf spring (1) facing a wheel (10) of the motor vehicle is rigidly connected to one of the links (2), wherein the links (2) are oriented substantially in the longitudinal direction of the motor vehicle and are each connected via a second bearing (7), directly or via a subframe, to the structure (9) and are each connected via at least a third bearing (5, 6) to one of the wheel carriers (3), **characterized in that** each wheel carrier (3) has, connected thereto, a camber link (8) which is connected to the structure (9) directly or via a subframe.

2. Axle for a motor vehicle, according to Claim 1, **characterized in that** the transverse leaf spring (1) is embodied as a fibre composite part.

3. Axle for a motor vehicle, according to Claim 1, **characterized in that** the first bearings (4) are embodied as rubber-metal bearings.

4. Axle for a motor vehicle, according to Claim 1, **characterized in that** the links (2) are embodied as fibre composite parts.

## Revendications

1. Essieu pour un véhicule automobile, comprenant au moins un ressort à lame transversal (1) fixé par le biais de deux premiers paliers (4) directement ou par le biais d'un cadre auxiliaire à une caisse (9) du véhicule automobile, deux bras oscillants (2) et deux supports de roue (3), une extrémité du ressort à lame transversal (1) tournée vers une roue (10) du véhicule automobile étant à chaque fois connectée rigidement à l'un des bras oscillants (2), les bras oscillants (2) étant orientés essentiellement dans la direction longitudinale du véhicule automobile, et étant connectés à chaque fois par le biais d'un deuxième palier (7) directement ou par le biais d'un cadre auxiliaire à la caisse (9), et étant connectés à chaque fois par le biais d'un troisième palier (5, 6) à l'un des supports de roue (3), **caractérisé en ce qu'**à chaque support de roue (3) est associé un bras de carrossage (8) connecté à celui-ci, lequel est connecté à la caisse (9) directement ou par le biais d'un cadre auxiliaire.

2. Essieu pour un véhicule automobile selon la revendication 1, **caractérisé en ce que** le ressort à lame transversal (1) est réalisé sous forme de pièce composite renforcée par des fibres.

3. Essieu pour un véhicule automobile selon la revendication 1, **caractérisé en ce que** les premiers paliers (4) sont réalisés sous forme de paliers en caoutchouc métal.

4. Essieu pour un véhicule automobile selon la revendication 1, **caractérisé en ce que** les bras oscillants (2) sont réalisés sous forme de pièces composites renforcées par des fibres.
